# EUROPEAN PATENT SPECIFICATION

(11) **EP 1 746 518 B1**
(45) Date of publication and mention of the grant of the patent: **27.01.2010**
(21) Application number: 05015548.0
(22) Date of filing: 18.07.2005
(51) Int. Cl.: G06F 17/30

(54) **Method and system for sharing multimedia data by a plurality of communication devices**
Verfahren und System zur gemeinsamen Nutzung von Multimedia-Daten in mehreren Kommunikationsvorrichtungen
Procédé et système de partage de donnèes multimedia entre plusieurs dispositifs de communication

(43) Date of publication of application: 24.01.2007
(73) Proprietor: Sony Ericsson Mobile Communications AB, 221 88 Lund (SE)
(72) Inventor: De Léon, David, 223 59 Lund (SE)
(74) Representative: Banzer, Hans-Jörg

(56) References cited:
- WO-A-2004/084536
- US-A1- 2005 043 043
- US-B1- 6 633 809

## Description

### TECHNICAL FIELD OF THE INVENTION

The present invention relates to a method for sharing multimedia application data by a plurality of communication devices. Said multimedia application data that are shared by the communication devices are in particular video and audio data and/or digital pictures. Furthermore, the present invention also relates to a system for sharing multimedia application data.

### DESCRIPTION OF RELATED ART

The advent of digital photography as well as the Internet have considerably increased the possibilities for people to share their pictures. The costs of the duplication of a digital picture are negligible and data files can be easily sent via the Internet and stored by the users on their computers.

Within the last years, the quality of digital cameras has been considerably increased. Nowadays, also mobile communication devices, e.g. mobile phones, comprise integrated digital cameras wherein the quality of these cameras has approached the quality of classical digital compact cameras. Thus, the need to share pictures taken with such camera phones increases. However, so far only limited possibilities of sharing pictures between phones exist.

Today, there are a handful of different ways in which pictures taken with a camera phone or other data that can be used in multimedia applications of such phones can be shared amongst different users. The most common way for sharing these data is to transmit single data files, e.g. via IR, Bluetooth or e-mail from one user to another. Additionally, also physically exchanging memory cards or using a computer as an intermediary device allows the sharing of data.

One problem involved with the current methods for sharing multimedia application data is that there is no way for several users to simultaneously exchange data material in an easy and spontaneous manner. Mobile phones have only small screens and only a few pictures can be seen at the same time. Thus, even with a small group of users it is impractical to see all the pictures that people have taken. Furthermore, it is complicated to keep track of who wants which picture and laborious to ensure that everyone really gets what he wants.

The US 2005/0043043 A1 discloses a local information delivery system comprising a beacon that stores data that can be uploaded by a user. Other users can download said data from said beacon. However, there is no possibility for a user to delete the data once they are uploaded. Therefore, anyone is able to download said data. As far as pictures are concerned, a user usually wants to give access to his pictures to a limited group of people, bit not to everyone.

Accordingly, there is a need for a new possibility of sharing multimedia application data by a plurality of communication devices.

### SUMMARY

The present invention aims to solve the above-mentioned problem by providing a method for sharing multimedia application data by a plurality of communication devices, wherein said method comprises the following steps:
a) at least two communication devices establish a short-range wireless communication link to a data distribution device;
b) at least one of the communication devices transmits the data that are offered for sharing to the data distribution device and said data are stored by distribution device;
c) the data offered by the communication devices for sharing are presented by the data distribution device on at least one display;
d) one of the communication devices being connected to the data distribution device transmits a requesting information to said data distribution device, said requesting information identifying data that are requested for download to the communication device;
e) the data distribution device directly transmits the requested data to the communication device; and
f) the data stored by the data distribution device are deleted if the communication link between the data distribution device and the communication device that has offered the data is terminated.

The method according to the present invention is based on the idea of providing a central unit, the so-called data distribution device that is responsible for the data distribution and therefore simultaneously connected to all communication devices. The central data distribution device informs on the data that are offered for sharing and is further responsible for the transmission of the data that are requested by at least one of the users of the inventive method. In case a user decides that he wants to download at least one of the application data offered, the data distribution device will automatically take the necessary steps in order to ensure that the user gets the data he has asked for.

Accordingly, an automatic way for sharing data is provided which allows a plurality of users to simultaneously select and download data in a very convenient way.

The data that are shared between the communication devices in accordance with the present invention are preferably pictures that have been taken with digital cameras. However, a person skilled in the art will readily understand that the method of the present invention could also be used for sharing audio/video data or other data that can be used by communication devices with one of their multimedia applications.

In the present invention, the data that are offered for sharing by the different communication devices are transmitted to the data distribution device and stored by said data distribution device in specific storing means. In case one of the communication devices requests the download of one of the offered data, the data distribution device will directly transmit the requested data to said communication device.

Accordingly, the data transmission always takes place from the data distribution device to one of the communication devices or in the other direction. A bi-directional communication link, however, only between two participants of the data sharing system is not necessary. In this way, all participants of the data distribution system can browse the offered data and download them at the same time.

The presentation of the data that are offered for sharing by the data distribution device can take place in different ways. According to one embodiment of the present invention, the data distribution device is connected to a display - e.g. to a TV - and graphically presents the data that could actually be downloaded. In case said data refer to pictures, thumbnails of the pictures are shown on the TV screen. Each participant of the data sharing system is now able to browse over the screen of the TV in order to select specific data and request a download of these selected data. This browsing is e.g. achieved by assigning selection devices - e.g. coloured frames - to the different participants of the distribution system wherein the user is able to move his frame over the TV screen in order to select one of the pictures.

In a second embodiment, the data offered for sharing are presented in a slideshow mode showing successively the offered pictures in full screen for several seconds. If a participant of the data distribution system decides that he would like to download the data actually presented by the data distribution device, he transmits a request information to the data distribution device which in response to said request information transmits the data for download to the communication device. In this second embodiment, it would also be possible to use the displays of the different communication devices in order to present the slideshow directly on these displays. Again, a short information on the data that are offered for download is presented on the screen of each device and the user is free to select these data in order to download them.

In accordance with the present invention, also a system for sharing multimedia application data is provided wherein said system comprises one data distribution device and at least two communication devices that are connected to the data distribution device via a short-range wireless communication link, wherein the data distribution device is adapted to
a) receive information from at least one of the communication devices, said information informing on data that are offered for sharing by said communication device;
b) present the data that are offered by the communication devices for sharing on a display;
c) receive a requesting information of at least one of the communication devices informing on the data that said communication device wants to download;
d) directly transmit the requested data to said communication device (20, 30, 40); and
e) delete the stored data if the communication link (21, 31, 41) between the data distribution device (10) and the communication device (20, 30, 40) that has offered the data is terminated.

### BRIEF DESCRIPTION OF THE DRAWINGS

In the following, the present invention is explained in more detail with respect to the accompanying drawings.
Fig. 1 schematically shows a system for sharing multimedia application data by a plurality of communication devices in accordance with the method of the present invention;
Fig. 2 shows an enlargement of the presentation of the data that are offered for sharing on a TV screen and
Fig. 3 shows a communication device that has been logged to a data sharing session.

### DETAILED DESCRIPTION OF EMBODIMENT

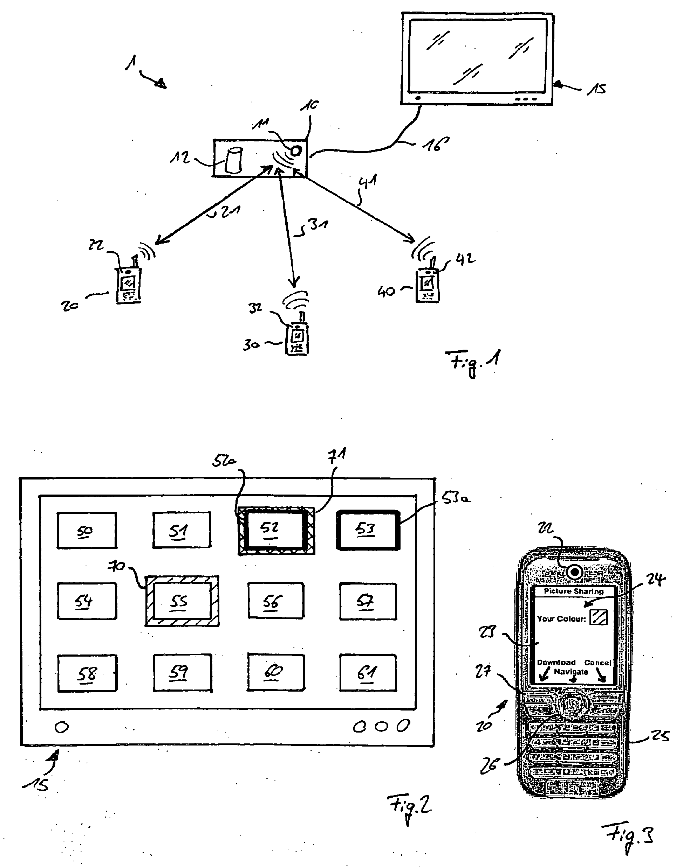

In Fig. 1, a system for sharing multimedia application date in accordance with the present invention is generally designed by 1. Main elements of the system 1 are a data distribution device 10 and a plurality of participants of the system that are represented by mobile phones 20, 30, 40.

In the present embodiment, the system 1 is used for sharing pictures taken by the mobile phones 20, 30, 40 with their integrated digital cameras 22, 32, 42. A possible scenario for the use of the present invention is a party where the guests of the party would like to share the pictures they have taken with their camera phones 20, 30, 40. It is commonly known that such pictures can be transferred from one phone to another by using a bi-directional communication link (e.g. Bluetooth) or by sending an MMS over a communication network. However, by using this conventional method for sharing pictures, it would be very complicated to distribute all pictures which are offered for sharing to all participants of the system 1.

In order to avoid this problem, a central data distribution device 10 is provided which is connected with each of the communication devices 20, 30, 40 via a short-range communication link 21, 31, 41. Preferably, the short-range communication links 21, 31, 41 are communication links in accordance with the known Bluetooth standard. The data distribution device 10 therefore comprises communication means 11 for establishing parallel communication links to all participants of the system 1.

In order to inform all participants of the system 1 at the same time on the data that are offered for sharing, a central display device 15 is provided which is connected with the data distribution device 10. In the present embodiment, the display device 15 is represented by a conventional TV which is connected to the data distribution device 10 via a cable 16. It would also be possible to integrate the data distribution device 10 with the TV 15.

Generally spoken, the present system 1 is based on the idea that all participants of the system 1 inform the central data distribution device 10 on the data they would like to offer for sharing. The data distribution device 10 then presents the offered data on the TV screen 15 and each participant can freely decide which of the data he wants to download. A user can now inform the data distribution device 10 on these data he would like to download on his phone 20, 30, 40 and the data transfer is afterwards initiated by the data distribution device 10.

### In more detail, the system 1 works as follows:

In order to share pictures taken with the digital cameras 22, 32, 42 integrated in the mobile phones 20, 30, 40, a user of the e.g. first mobile phone 20 initiates the so-called picture-sharing mode. This option could e.g. be made available in the picture folder and/or the camera application of the mobile phone 20. Alternatively, this mode could automatically be initiated when the mobile phone is within the Bluetooth communication range of the data distribution device 10. In case the user of the phone 20 manually initiates the picture sharing mode, the phone 20 then searches for the data distribution device 10 in its neighbourhood by using its Bluetooth communication means.

After having established the communication link 21 to the data distribution device 10, the phone 20 sends all pictures that the user wants to offer for sharing to the data distribution device 10. This could mean that all pictures are transferred to the data distribution device 10. However, the user could also decide to offer only a user-specified subset of the pictures stored on his phone. The data distribution device 10 comprises internal storing means 12 in order to store the digital data that are later offered for download to all participants of the system 1.

After having received pictures from at least one of the participants of the system 1, the data distribution device 10 informs all participants on the data that are offered for download. According to a first embodiment of the present invention, this is realised by displaying thumbnails of all pictures that have been received from the participants 20, 30, 40. As shown in Fig. 2, the TV screen 15 connected to the data distribution device 10 displays several thumbnails 50 to 61 of the pictures that can be downloaded by all mobile communication devices that have activated the picture sharing mode.

Each mobile communication device that has been connected to the data distribution device 10 and is therefore a participant of the system 1 is automatically assigned a colour by the data distribution device. E.g., the user of the mobile phone 20 is informed on the colour that has been assigned to his mobile phone 20 by a message 24 that is shown on the display 23 of the phone 20 as it is shown in Fig. 3. Now, a selection device, e.g. a small frame 70, in the same colour that has been assigned to the mobile phone 20 appears on the TV screen 15. In Fig. 2, another selection device in the form of a frame 71 in a second colour is also shown on the screen 15 informing that a second user is logged to the actual data sharing session.

The user is now able to navigate this selection device 70 over the TV screen 15 in order to select pictures that he is interested in and to request a download of this data. The navigation over the TV screen 15 takes place by using the keypad of the mobile phone 20 wherein specific keys are used in order to move the frame 70 to the left or to the right, upwards or downwards. In the embodiment shown in Fig. 3, the cursor or joystick key 26 is used for generating this navigation information which is then forwarded to the data distribution device 10 via the Bluetooth link.

After having marked a picture that the user is interested in, he can request a download of this picture by pressing a specific selection key 27 on the keypad 25 of the phone 20 which initiates a transfer of the respective data stored in the storing means 12 of the data distribution device 10 to the phone 20. In this way, all users logged to the data distribution device 10 can simultaneously move their coloured selection devices 70, 71 over the screen and request pictures. Thus, a very convenient way is provided for sharing pictures by a plurality of persons.

There are several ways how the system explained above can be modified.

A first possibility would be to graphically indicate which pictures have been downloaded in order to show which pictures were successfully offered for sharing. This graphical indication could be realised e.g. by increasing the thickness of the frame around the respective thumbnail. As e.g. shown in Fig. 2, the two pictures 52, 53 in the upper right corner of the TV screen 15 have already been downloaded by at least one user which is indicated by a thicker frame 52a, 53a.

Normally, pictures that are offered by a specific user are automatically removed from the storing means 12 of the data distribution device 10 if the user has left the communication range of the data distribution device 10. Since the user is not anymore a participant of the data sharing session, it is no longer possible to download pictures that have been offered by this user. However, it would also be possible to leave the pictures within the storing means 12 even when the user is absent. E.g., the pictures could be stored for a specific time after the user has left the system 1 in order to allow other users to still download these pictures. Both options could be provided to the participants of the system 1 wherein each user can freely decide whether his pictures can be downloaded only as long as he is a participant of the system 1 or whether pictures can be downloaded for a longer time span.

Another possibility for further developing the system 1 would be that the users can choose the option that pictures that they are taking while they are connected to the data distribution device 10 are automatically uploaded to the data distribution device 10. Thus, each picture a user takes during the picture sharing session is automatically offered for sharing to the other users of the system 1.

A further way of modifying the system of the present invention relates to the transmission of the data. In the embodiment explained above, the complete data files of the pictures that are offered for sharing are transferred from the mobile phones 20, 30, 40 to the data distribution device 10 after the Bluetooth link has been established. However, it would also be possible that the phones 20, 30, 40 transfer at the beginning only a short information on the data that are offered for sharing. For example, the phones 20, 30, 40 could only transmit thumbnails of the pictures to the data distribution device 10 that are then presented on the display 15. Only after a picture has been really requested for download, the complete data file is forwarded from the originating phone to the requesting phone via the data distribution device 10.

When there are no users actively browsing pictures on a TV screen 15, the data distribution device 10 could change to a so-called slideshow mode in which any pictures left on the data distribution device 10 are shown in full screen on the TV 15. If this mode is combined with the option mentioned above of pictures being automatically uploaded to the data distribution device 10, the slideshow might be set to favour recent pictures over old ones. During the slideshow mode, users that have remained connected to the data distribution device 10 can press a specific selection key on their phones in order to initiate a download of the picture that is currently displayed on the screen. Thus, instead of showing all pictures that are offered for sharing at the same time, the pictures are now successively presented and a user can select a picture which is actually shown if he is interested in it.

The slideshow mode could also be used in order to transfer small thumbnails to all users that are connected to the data distribution device 10. In this case, the thumbnails would be successively shown on the displays of the multimedia communication devices and again a user can choose to download the data is case he is interested in the actually shown information. In this way, the screens of the communication devices can additionally or alternatively be used in order to present the pictures that are offered for download.

Accordingly, each user is free to select one of the offered pictures and download it to its communication device. A specific advantage of the present invention is that all users are allowed to simultaneously browse and download content that is distributed on the several devices of the users. Thus, the present invention provides a very convenient way in order to share multimedia application data.

As already mentioned above, the present invention is not restricted to the idea of sharing pictures taken with digital cameras. E.g., it would also be possible to share video or audio data by using the system of the present invention. Generally, data that could be used by multimedia applications of communication devices can be shared with the present invention in a very convenient way.

## Claims

1. A method for sharing multimedia application data by a plurality of communication devices (20, 30, 40), said method comprising the following steps:
a) at least two communication devices (20, 30, 40) establish a short-range wireless communication link (21, 31, 41) to a data distribution device (10);
b) at least one of the communication devices (20, 30, 40) transmits the data that are offered for sharing to the data distribution device (10) and said data are stored by distribution device (10);
c) the data offered by the communication devices (20, 30, 40) for sharing are presented by the data distribution device (10) on a display (15, 23);
d) one of the communication devices (20, 30, 40) being connected to the data distribution device (10) transmits a requesting information to said data distribution device (10), said requesting information identifying data that are requested for download to the communication device (20, 30, 40);
e) the data distribution device (10) directly transmits the requested data to the communication device (20, 30, 40);
**characterized by**
f) the data stored by the data distribution device (10) are deleted if the communication link (21, 31, 41) between the data distribution device (10) and the communication device (20, 30. 40) that has offered the data is terminated.

2. The method of claim 1,
wherein in step b) only an information on the content of the data that are offered for sharing is transmitted from the communication device (20, 30, 40) to the data distribution device (10) and
wherein in step e) the data are at first transmitted from the communication device (20, 30, 40) offering these data to the data distribution device (10) and further forward to the communication device (20, 30, 40) that has requested these data.

3. The method of one of the preceding claims,
wherein the selection and requesting operation of the communication devices (20, 30, 40) are-graphically displayed by using a selection device (70, 71).

4. The method of one of the preceding claims,
wherein data that have been requested by at least on of the communication devices (20, 30, 40) are graphically indicated.

5. The method of one of the preceding claims,
wherein the communication link established between the communication devices (20, 30, 40) and the data distribution device (10) is a Bluetooth link.

6. The method of one of the preceding claims,
wherein the data that are shared are digital pictures.

7. The method of claim 6,
wherein the pictures offered for download are presented as thumbnails (50-61) be the data distribution device (10).

8. The method of claim 7,
wherein a plurality of the thumbnails (50-61) is simultaneously shown on a central display device (15).

9. The method of claim 7,
wherein the thumbnails (50-61) are successively shown on a display.

10. The method of claim 9,
wherein the thumbnails (50-61) are shown on the displays (23) of the communication devices (20, 30, 40).

11. The method of claim 6,
wherein the pictures offered for download are successively shown on a central display device (15).

12. A system (1) for sharing multimedia application data, said system comprising one data distribution device (10) and at least two communication devices (20, 30, 40) that are connected to the data distribution device (10) via a short-range wireless communication link (20, 30, 40),
wherein the data distribution device (10) is adapted to
a) receive information from at least one of the communication devices (20; 30; 40), said information informing on data that are offered for sharing by said communication device (20, 30, 40);
b) present the data that are offered by the communication devices (20, 30, 40) for sharing on a display (15);
c) receive a requesting information of at least one of the communication devices (20, 30, 40) informing on the data that said communication device (20, 30, 40) wants to download;
d) directly transmit the requested data to said communication device (20, 30, 40); 5 and **characterized in that** the data distribution device is adapted to
e) delete the stored data if the communication link (21, 31, 41) between the data distribution device (10) and the communication device (20, 30. 40) that has offered the data is terminated.

## Patentansprüche

1. Verfahren für eine gemeinsame Nutzung von Multimediaanwendungsdaten von mehreren Kommunikationsvorrichtungen (20, 30, 40), wobei das Verfahren die folgenden Schritte umfasst:
a) mindestens zwei Kommunikationsvorrichtungen (20, 30, 40) richten eine drahtlose Kurzstreckenkommunikationsverbindung (21, 31, 41) zu einer Datenverteilungsvorrichtung (10) ein;
b) mindestens eine der Kommunikationsvorrichtungen (20, 30, 40) überträgt die Daten, welche für eine gemeinsame Nutzung angeboten werden, zu der Datenverteilungsvorrichtung (10) und die Daten werden von der Verteilungsvorrichtung (10) gespeichert;
c) die von den Kommunikationsvorrichtungen (20, 30, 40) für eine gemeinsame Nutzung angebotenen Daten werden von der Datenverteilungsvorrichtung (10) auf einer Anzeige (15, 23) dargestellt;
d) eine der Kommunikationsvorrichtungen (20, 30, 40), welche mit der Datenverteilungsvorrichtung (10) verbunden ist, überträgt eine Anforderungsinformation zu der Datenverteilungsvorrichtung (10), wobei die Anforderungsinformation Daten identifiziert, welche für ein Herunterladen zu der Kommunikationsvorrichtung (20, 30, 40) angefordert werden;
e) die Datenverteilungsvorrichtung (10) überträgt die angeforderten Daten direkt zu der Kommunikationsvorrichtung (20, 30, 40);
**dadurch gekennzeichnet, dass**
f) die von der Datenverteilungsvorrichtung (10) gespeicherten Daten gelöscht werden, wenn die Kommunikationsverbindung (21, 31, 41) zwischen der Datenverteilungsvorrichtung (10) und der Kommunikationsvorrichtung (20, 30, 40), welche die Daten angeboten hat, beendet wird.

2. Verfahren nach Anspruch 1,
wobei in Schritt b) nur eine Information über den Inhalt der Daten, welche für eine gemeinsame Nutzung angeboten werden, von der Kommunikationsvorrichtung (20, 30, 40) zu der Datenverteilungsvorrichtung (10) übertragen wird, und
wobei in Schritt e) die Daten zuerst von der Kommunikationsvorrichtung (20, 30, 40), welche diese Daten anbietet, zu der Datenverteilungsvorrichtung (10) übertragen werden und zu der Kommunikationsvorrichtung (20, 30, 40), welche diese Daten angefordert hat, weitergeleitet werden.

3. Verfahren nach einem der vorhergehenden Ansprüche,
wobei der Auswahl- und Anforderungsvorgang der Kommunikationsvorrichtung (20, 30, 40) unter Verwendung einer Auswahlvorrichtung (70, 71) graphisch dargestellt werden.

4. Verfahren nach einem der vorhergehenden Ansprüche,
wobei die Daten, welche von mindestens einer der Kommunikationsvorrichtungen (20, 30, 40) angefordert wurden, graphisch angezeigt werden.

5. Verfahren nach einem der vorhergehenden Ansprüche,
wobei die Kommunikationsverbindung, welche zwischen den Kommunikationsvorrichtungen (20, 30, 40) und der Datenverteilungsvorrichtung (10) eingerichtet ist, eine Bluetooth-Verbindung ist.

6. Verfahren nach einem der vorhergehenden Ansprüche,
wobei die Daten, welche gemeinsam genutzt werden, digitale Bilder sind.

7. Verfahren nach Anspruch 6,
wobei die Bilder, welche für ein Herunterladen angeboten werden, als Miniaturbilder (50-61) von der Datenverteilungsvorrichtung (10) dargestellt werden.

8. Verfahren nach Anspruch 7,
wobei mehrere der Miniaturbilder (50-61) gleichzeitig auf einer zentralen Anzeigevorrichtung (15) gezeigt werden.

9. Verfahren nach Anspruch 7,
wobei die Miniaturbilder (50-61) nacheinander auf einer Anzeige gezeigt werden.

10. Verfahren nach Anspruch 9,
wobei die Miniaturbilder (50-61) auf den Anzeigen (23) der Kommunikationsvorrichtungen (20, 30, 40) gezeigt werden.

11. Verfahren nach Anspruch 6,
wobei die Bilder, welche für ein Herunterladen angeboten werden, nacheinander auf einer zentralen Anzeigevorrichtung (15) gezeigt werden.

12. System (1) für eine gemeinsame Nutzung von Multimediaanwendungsdaten, wobei das System eine Datenverteilungsvorrichtung (10) und mindestens zwei Kommunikationsvorrichtungen (20, 30, 40), welche mit der Datenverteilungsvorrichtung (10) über eine drahtlose Kurzstreckenkommunikationsverbindung (21, 31, 41) verbunden sind, umfasst,
wobei die Datenverteilungsvorrichtung (10) ausgestaltet ist,
a) eine Information von mindestens einer der Kommunikationsvorrichtungen (20, 30, 40) zu empfangen, wobei die Information über Daten informiert, welche von der Kommunikationsvorrichtung (20, 30, 40) für eine gemeinsame Nutzung angeboten werden;
b) die Daten, welche von den Kommunikationsvorrichtungen (20, 30, 40) für eine gemeinsame Nutzung angeboten werden, auf einer Anzeige (15) darzustellen;
c) eine Anforderungsinformation von mindestens einer der Kommunikationsvorrichtungen (20, 30, 40) zu empfangen, welche über die Daten informiert, welche die Kommunikationsvorrichtung (20, 30, 40) herunterladen möchte;
d) die angeforderten Daten zu der Kommunikationsvorrichtung (20, 30, 40) direkt zu übertragen;
und
**dadurch gekennzeichnet, dass** die Datenverteilungsvorrichtung ausgestaltet ist,
e) die gespeicherten Daten zu löschen, wenn die Kommunikationsverbindung (21, 31, 41) zwischen der Datenverteilungsvorrichtung (10) und der Kommunikationsvorrichtung (20, 30, 40), welche die Daten angeboten hat, beendet wird.

## Revendications

1. Procédé de partage de données d'applications multimédia par une pluralité de dispositifs (20, 30, 40) de communication, ledit procédé comprenant les étapes suivantes :
a) au moins deux dispositifs (20, 30, 40) de communication établissent une liaison (21, 31, 41) de communication sans fil à courte portée avec un dispositif (10) de distribution de données ;
b) au moins l'un des dispositifs (20, 30, 40) de communication transmet, au dispositif (10) de distribution de données, les données qui sont proposées pour partage et lesdites données sont mémorisées par le dispositif (10) de distribution ;
c) les données proposées pour partage par les dispositifs (20, 30, 40) de communication sont présentées par le dispositif (10) de distribution de données sur un écran (15, 23) ;
d) l'un des dispositifs (20, 30, 40) de communication étant connecté au dispositif (10) de distribution de données transmet une information de demande audit dispositif (10) de distribution de données, ladite information de demande identifiant des données qui sont demandées pour téléchargement dans le dispositif (20, 30, 40) de communication ;
e) le dispositif (10) de distribution de données transmet directement les données demandées au dispositif (20, 30, 40) de communication ;
**caractérisé par le fait que** :
f) les données mémorisées par le dispositif (10) de distribution de données sont effacées si la liaison (21, 31, 41) de communication entre le dispositif (10) de distribution de données et le dispositif (20, 30, 40) de communication qui a proposé les données est terminée.

2. Procédé selon la revendication 1,
dans lequel, à l'étape b), seule une information sur le contenu des données qui sont proposées pour partage est transmise du dispositif (20, 30, 40) de communication au dispositif (10) de distribution de données, et
dans lequel, à l'étape e), les données sont en premier transmises du dispositif (20, 30, 40) de communication proposant ces données au dispositif (10) de distribution de données et réexpédiées ensuite au dispositif (20, 30, 40) de communication qui a demandé ces données.

3. Procédé selon l'une des revendications précédentes, dans lequel les opérations de choix et de demande des dispositifs (20, 30, 40) de communication sont affichées graphiquement par l'utilisation d'un dispositif (70, 71) de choix.

4. Procédé selon l'une des revendications précédentes, dans lequel des données qui ont été demandées par au moins l'un des dispositifs (20, 30, 40) de communication sont indiquées graphiquement.

5. Procédé selon l'une des revendications précédentes, dans lequel la liaison de communication établie entre les dispositifs (20, 30, 40) de communication et le dispositif (10) de distribution de données est une liaison Bluetooth.

6. Procédé selon l'une des revendications précédentes, dans lequel les données qui sont partagées sont des images numériques.

7. Procédé selon la revendication 6, dans lequel les images proposées pour téléchargement sont présentées sous forme de vignettes (50 à 61) par le dispositif (10) de distribution de données.

8. Procédé selon la revendication 7, dans lequel une pluralité de vignettes (50 à 61) est montrée simultanément sur un dispositif central (15) d'affichage.

9. Procédé selon la revendication 7, dans lequel les vignettes (50 à 61) sont montrées successivement sur un écran.

10. Procédé selon la revendication 9, dans lequel les vignettes (50 à 61) sont montrées sur les écrans (23) des dispositifs (20, 30, 40) de communication.

11. Procédé selon la revendication 6, dans lequel les images proposées pour téléchargement sont montrées successivement sur un dispositif central (15) d'affichage.

12. Système (1) de partage de données d'applications multimédia, ledit système comprenant un dispositif (10) de distribution de données et au moins deux dispositifs (20, 30, 40) de communication qui sont connectés au dispositif (10) de distribution de données via une liaison (20, 30, 40) de communication sans fil à courte portée,
dans lequel le dispositif (10) de distribution de données est apte :
a) à recevoir de l'information provenant d'au moins l'un des dispositifs (20, 30, 40) de communication, ladite information informant sur des données qui sont proposées pour partage par ledit dispositif (20, 30, 40) de communication ;
b) à présenter, sur un écran (15), les données qui sont proposées pour partage par les dispositifs (20, 30, 40) de communication ;
c) à recevoir une information de demande d'au moins l'un des dispositifs (20, 30, 40) de communication informant sur les données que ledit dispositif (20, 30, 40) de communication souhaite télécharger ;
d) à transmettre directement les données demandées audit dispositif (20, 30, 40) de communication ; et
**caractérisé en ce que** le dispositif de distribution de données est apte :
e) à effacer les données mémorisées si la liaison (21, 31, 41) de communication entre le dispositif (10) de distribution de données et le dispositif (20, 30, 40) de communication qui a proposé les données est terminée.
